# NEUE EUROPÄISCHE PATENTSCHRIFT

(11) **EP 2 823 689 B2**
(45) Veröffentlichungstag und Bekanntmachung des Hinweises auf die Entscheidung über den Einspruch: **29.01.2025**
(45) Hinweis auf die Patenterteilung: 17.10.2018
(21) Anmeldenummer: 13703378.3
(22) Anmeldetag: 06.02.2013
(51) Int. Cl.: H05B 3/84, B60R 11/04

(54) **SCHEIBENANORDNUNG MIT ELEKTRISCH BEHEIZBARER STREULICHTBLENDE**
DISC ASSEMBLY WITH ELECTRICALLY HEATED LIGHT SCATTERING APERTURE
AGENCEMENT DE DISQUES DOTÉ D'UN DIAPHRAGME DE LUMIÈRE DIFFUSÉE

(30) Priorität: 05.03.2012 EP 12158006
(43) Veröffentlichungstag der Anmeldung: 14.01.2015
(60) Teilanmeldung: 18180183.8
(73) Patentinhaber: SAINT-GOBAIN GLASS FRANCE, 92400 Courbevoie (FR)
(72) Erfinder: TIMMERMANN, Alwin, 50933 Köln (DE); WOHLFEIL, Dirk, B-4730 Raeren (BE)
(74) Vertreter: Gebauer, Dieter Edmund
(86) Internationale Anmeldenummer: PCT/EP2013/052268
(87) Internationale Veröffentlichungsnummer: WO 2013/131700

(56) Entgegenhaltungen:
- EP-A1- 2 644 005
- EP-B1- 1 724 568
- EP-B1- 1 986 887
- WO-A1-2004/020250
- WO-A1-2004/020250
- WO-A1-2005/090124
- WO-A1-2012/069115
- WO-A2-2010/037500
- DE-A1- 10 233 348
- DE-A1- 102006 007 343
- DE-A1- 102007 012 993
- DE-A1- 102008 050 320
- DE-A1- 102009 026 021
- DE-A1- 4 436 087
- DE-B4- 10 224 692
- DE-C1- 4 006 174
- DE-C1- 4 202 121
- JP-A- 2008 083 298
- US-A1- 2011 204 037
- US-A1- 2011 204 037
- DUBBEL TASCHENBUCH FÜR DEN MASCHINENBAU, Berlin , Heidelberg , New York, pages 1 - 10
- "Regensensor", WIKIPEDIA, vol. 9, 28 February 2012 (2012-02-28), pages 1 - 3, Retrieved from the Internet <URL:https://de.wikipedia.org/w/index.php?title=Regensensor&oldid=100235954> [retrieved on 20190701]

## Beschreibung

Die Erfindung bezieht sich auf eine Scheibenanordnung mit elektrisch beheizbarer Streulichtblende, insbesondere zum Beheizen eines optisch transparenten Scheibenbereichs mittels Strahlungswärme, ein Verfahren zu deren Herstellung und deren Verwendung.

Viele Fahrzeuge, Flugzeuge, Hubschrauber und Schiffe sind mit verschiedenen optischen Sensoren ausgestattet. Beispiele für optische Sensoren sind Kamerasysteme, wie Videokameras, Nachtsichtkameras, Restlichtverstärker oder passive Infrarotdetektoren wie FLIR (Forward Looking Infrared). Die Kamerasysteme können Licht im ultravioletten (UV), sichtbaren (VIS) und infraroten Wellenlängenbereich (IR) nutzen. Mit den Kamerasystemen lassen sich auch bei schlechten Witterungsverhältnissen, wie Dunkelheit und Nebel, Gegenstände, Fahrzeuge sowie Personen präzise erkennen. Diese Kamerasysteme können in Kraftfahrzeugen hinter der Windschutzscheibe im Fahrgastraum angeordnet werden. Damit bieten sie auch im Straßenverkehr die Möglichkeit, Gefahrensituationen und Hindernisse rechtzeitig zu erkennen.

Weitere Einsatzbereiche für optische Sensoren liegen in der elektronischen Distanzmessung (EDM), beispielsweise mit Hilfe von Laserentfernungsmessern. Hierbei kann die Entfernung zu anderen Fahrzeugen bestimmt werden. Derartige Systeme sind im militärischen Anwendungsbereich weit verbreitet, aber auch im zivilen Bereich ergeben sich viele Anwendungsmöglichkeiten. Durch Abstandsmessungen zum vorausfahrenden Fahrzeug lässt sich der notwendige Sicherheitsabstand bestimmen und die Verkehrssicherheit deutlich erhöhen.

Aufgrund ihrer Empfindlichkeit gegenüber Witterungseinflüssen oder Fahrtwinden müssen derartige Sensoren aber in allen Fällen durch entsprechende Scheiben geschützt werden. Der Sensor kann entweder innerhalb eines Fahrzeuges angebracht sein oder außerhalb wie bei Wärmebildkameras von Hubschraubern. Hierbei ist der Sensor in einem schwenkbaren Gehäuse außen am Hubschrauber angebracht. Um eine optimale Funktion der optischen Sensoren zu gewährleisten, sind bei beiden Möglichkeiten saubere und beschlagsfreie Scheiben zwingend notwendig.

Gleiches gilt für Strahlungsquellen, die auf der Innenseite von Fahrzeugverglasungen angeordnet sind. Derartige Strahlungsquellen sind beispielsweise optische Leuchtelementen, wie eine dritte Bremsleuchte hinter einer Heckscheibe. Die optischen Leuchtelemente durchleuchten einen Scheibenbereich, der aus ästhetischen und praktischen Gründen üblicherweise nicht durch Heizleiter beheizt wird. Dies ist beispielsweise der Fall, wenn dieser Bereich der Scheibe für Antennen, die nicht mit dem Heizfeld verbunden sind, genutzt wird.

Beschlag und Vereisungen behindern die Funktionsweise der Sensoren und Lichtquellen, da sie die Transmission elektromagnetischer Strahlung deutlich reduzieren. Während für Wassertropfen und Schmutzpartikel Wischersysteme eingesetzt werden können, reichen diese in der Regel bei Vereisung nicht aus. Hierbei sind Systeme notwendig, die das dem Sensor oder der Lichtquelle zugeordnete Scheibensegment bei Bedarf zumindest kurzzeitig aufheizen und damit einen unterbrechungsfreien Einsatz ermöglichen.

Neben der äußeren Scheibenoberfläche muss vor allem die innen liegende Scheibe beschlagsfrei gehalten werden. Damit keine Schmutz- und Staubpartikel den Sensor oder die Lichtquelle verschmutzen, wird die Anordnung aus Sensor oder Lichtquelle und Scheibe in der Regel eingekapselt. Dringt in diesen eingekapselten Raum Feuchtigkeit ein, so kann diese Feuchtigkeit vor allem bei kalten Außentemperaturen an der Scheibeninnenseite kondensieren und die Transmission durch den Scheibenbereich einschränken.

DE 101 56 850 A1 offenbart einen Sensor in einer Fahrzeugfensterscheibe, dessen Linse vom Fahrzeuginnenraum durch eine Einhausung abgeschlossen ist. Dieser Aufbau verhindert die Ablagerung von Staubpartikeln auf der Linse. Zum Luftaustausch ist ein Partikelfilter vorgesehen.

DE 10 2004 054 161 A1 offenbart einen Infrarotlicht-Erfassungsbereich in einer Fahrzeugwindschutzscheibe. Der Infrarotlicht-Erfassungsbereich ist von Heizelementen umgeben, die diesen durch Wärmeleitung eis- und beschlagsfrei halten.

EP 1 605 729 A2 offenbart eine elektrisch beheizbare Scheibe mit einem Kamerafenster. Dieses Kamerafenster wird über eine Heizvorrichtung beschlags- und eisfrei gehalten. Das Heizelement wird an der Position des Kamerafensters in die Scheibe einlaminiert. Zusätzlich kann an der Scheibenoberfläche noch ein zusätzliches Heizelement angebracht werden. Das zusätzliche Heizelement wird bevorzugt als leitfähige Paste auf die Scheibenoberfläche gedruckt.

US 2011/0204037 A1 offenbart eine Heizvorrichtung für den Bereich der Scheibenwischerruhestellung von Windschutzscheiben. Die Erwärmung dieses Bereiches der Windschutzscheibe wird dabei durch direkten Kontakt der Windschutzscheibe mit dem Heizelement oder durch Ventile mit warmer Luft erzeugt. WO 2004/020250 A1 offenbart ein Verfahren und eine Vorrichtung zur Befestigung eines Sensors an einer Fahrzeugscheibe.

JP2002341432 A offenbart eine Fahrzeugscheibe mit einem Kamerafenster. Das Kamerafenster wird durch eine Konvektionsheizvorrichtung beschlagsfrei gehalten.

Die Aufgabe der Erfindung liegt darin, eine verbesserte Scheibenanordnung mit einer beheizbaren Streulichtblende bereitzustellen, welche es ermöglicht einen Bereich einer Scheibe zu beheizen und einfach und kostengünstig aus fertigen, standardmäßigen Scheiben ohne größere Umbaumaßnahmen herstellbar ist.

Die Aufgabe der vorliegenden Erfindung wird erfindungsgemäß durch eine Scheibenanordnung mit elektrisch beheizbarer Streulichtblende gemäß dem unabhängigen Anspruch 1 gelöst. Des Weiteren umfasst die Erfindung ein Verfahren zu deren Herstellung und deren Verwendung nach den unabhängigen Ansprüchen 12 und 13. Bevorzugte Ausführungen gehen aus den Unteransprüchen hervor.

Die erfindungsgemäße Scheibenanordnung umfasst mindestens:
- eine Scheibe mit einer Einhausung auf der Innenseite der Scheibe,
- einen Strahlungsempfänger, der innerhalb der Einhausung so der Scheibe zugewandt ist, dass ein Strahlengang einer elektromagnetischen Strahlung durch einen vorgegebenen Bereich der Scheibe führt,
- eine Streulichtblende, die innerhalb der Einhausung und unterhalb des Strahlengangs angeordnet ist und
- eine elektrisch beheizbare Fläche in der Streulichtblende, die den Bereich beheizt.

Eine alternative erfindungsgemäße Scheibenanordnung umfasst mindestens:
- eine Scheibe mit einer Einhausung auf der Innenseite der Scheibe,
- eine Strahlungsquelle, die innerhalb der Einhausung so der Scheibe zugewandt ist, dass ein Strahlengang einer elektromagnetischen Strahlung durch einen vorgegebenen Bereich der Scheibe führt,
- eine Streulichtblende, die innerhalb der Einhausung und unterhalb des Strahlengangs angeordnet ist und
- eine elektrisch beheizbare Fläche in der Streulichtblende, die den Bereich beheizt.

Wird die elektrisch beheizbare Fläche beheizt, so strahlt sie Wärmestrahlung ab und beheizt durch die Wärmestrahlung den vorgegebenen Bereich der Scheibe. Dazu ist es notwendig, dass der Strahlengang des Strahlungsempfängers oder der Strahlungsquelle zwischen dem vorgegebenen Bereich der Scheibe und der Streulichtblende verläuft, damit der Strahlengang nicht behindert oder eingeschränkt wird.

Die Scheibenanordnung umfasst mindestens eine Scheibe und mindestens einen vorgegebenen Bereich der Scheibe. Der vorgegebene Bereich muss transparent sein für die elektromagnetischen Informationen oder Signale, die vom Strahlungsempfänger empfangen werden sollen oder die von der Strahlungsquelle durch den Bereich transmittiert werden sollen. Der Bereich kann ein beliebiger Teil der Scheibe oder ein eingesetztes Scheibensegment sein, das für die entsprechenden optischen und elektromagnetischen Signale eine hohe Transmission aufweist. Das Merkmal "transparent" bezieht sich im Rahmen der Erfindung auf die Transparenz im für den Strahlungsempfänger oder die Strahlungsquelle relevanten Wellenlängenbereich. Für Strahlungsempfänger oder Strahlungsquellen im sichtbaren Bereich und/oder im Infrarotbereich beträgt die Transmission für Wellenlängen von 200 nm bis 2000 nm bevorzugt mehr als 60 %, besonders bevorzugt > 70 % und insbesondere > 90 %. Für Strahlungsempfänger oder Strahlungsquellen im Infrarotbereich beträgt die Transmission im Wellenlängenbereich von 800 nm bis 1300 nm, bevorzugt mehr als 60 %, besonders bevorzugt > 70 % und insbesondere > 90 %. Der Bereich nimmt bevorzugt weniger als 10 %, besonders bevorzugt weniger als 5 % der Scheibenoberfläche ein.

Der erfindungsgemäße Strahlungsempfänger ist beispielsweise eine Kamera oder ein lichtempfindlicher Sensor, der infrarote, sichtbare und/oder ultraviolette elektromagnetische Strahlung detektieren kann. Der Strahlungsempfänger umfasst bevorzugt Kameras für sichtbares Licht der Wellenlängen von 400 nm bis 800 nm und/oder infrarotes Licht der Wellenlängen von 800 nm bis 1300 nm.

Die erfindungsgemäße Strahlungsquelle ist bevorzugt eine Lichtquelle, beispielsweise mindestens eine Glühbirne oder eine Leuchtdiode, die infrarote, sichtbare und/oder ultraviolette elektromagnetische Strahlung emittieren kann.

Die Einhausung schützt den Strahlungsempfänger oder die Strahlungsquelle vor Schmutz- und Staubpartikeln sowie unerwünschten Lichteinfall. Die Einhausung ist bevorzugt im oberen Scheibenbereich angeordnet, bevorzugt nicht mehr als 30 % der Scheibenhöhe vom oberen und/oder unteren Rand entfernt. Die Einhausung enthält bevorzugt ein Polymer, besonders bevorzugt Polybutylenterephthalat, Polyamide, Polycarbonat, Polyurethane, Polybutylen, Polypropylen, Polyethylen, Polyethylenterephthalat, Polyvinylchlorid, Polystyrol, Acrylnitril-Butadien-Styrol, Ethylenvinylacetat, Ethylenvinylalkohol, Polyimide, Polyester, Polyketone, Polyetheretherketone und/oder Polymethylmethacrylat sowie Gemische, Blockpolymere und Copolymere davon.

Die Scheibe enthält bevorzugt Glas und/oder Polymere, bevorzugt Flachglas, Floatglas, Quarzglas, Borosilikatglas, Kalk-Natron-Glas, Polymethylmethacrylat, Polycarbonat und/oder Gemische oder Schichtverbünde davon. Die Scheibe umfasst bevorzugt Einscheibensicherheitsglas (ESG) oder Verbundscheibensicherheitsglas (VSG).

Der vorgegebene Bereich weist bevorzugt einen opaken und/oder farbigen Rand auf. Der Rand kann sowohl als Randstreifen oder auch als Randbereich ausgebildet sein.

Die erfindungsgemäße Streulichtblende weist eine elektrisch beheizbare Fläche auf. Die Streulichtblende ist dabei so angeordnet, dass sich der Strahlengang der elektromagnetischen Strahlung, die der Strahlungsempfänger empfängt beziehungsweise die die Strahlungsquelle emittiert, zwischen der Streulichtblende und der Scheibe befindet. Dies bezieht sich insbesondere auf den Teil des Strahlengangs, der innerhalb der Einhausung verläuft. Die elektrisch beheizbare Fläche kann ein eigenes Bauelement sein, das beispielsweise mit der Streulichtblende verbunden ist, beispielsweise verklebt, verlötet, verpresst oder verschweißt. Die elektrisch beheizbare Fläche kann auch ein Bereich des Materials der Streulichtblende sein.

Es ist besonders vorteilhaft, wenn der vorgegebene Bereich und die elektrisch beheizbare Fläche möglichst parallel verlaufen, so dass die Wärmestrahlung, die von der elektrisch beheizbaren Fläche ausgeht, möglichst senkrecht auf den Bereich der Scheibe auftrifft. Des Weiteren ist es vorteilhaft, wenn keine weiteren Bauelemente oder Teile der Einhausung die Wärmestrahlung abschirmen können.

Sind die beheizbare Fläche der Streulichtblende und der vorgegebene Bereich der Scheibe, durch den der Strahlengang verläuft, parallel angeordnet, wird dadurch ein sehr großer Bauraum benötigt, der im Falle einer Anordnung an einer Fahrzeugscheibe unerwünscht weit in den Innenraum ragt. In einer vorteilhaften Ausgestaltung der Erfindung beträgt der Winkel α zwischen dem vorgegebene Bereich und der Streulichtblende von 5° bis 65° und bevorzugt von 10° bis 45°. Dadurch wird eine flachere Anordnung der Streulichtblende an der Scheibe ermöglicht.

Die elektrisch beheizbare Fläche der Streulichtblende hat vorteilhafterweise eine Grundfläche von 20 cm² bis 300 cm², bevorzugt von 20 cm² bis 40 cm² für Anordnungen an einer Windschutzscheibe und von 100 cm² bis 300 cm² für Heckscheiben von Fahrzeugen. Die Grundfläche ist bevorzugt trapezförmig, wobei die größere der beiden parallelen Seiten unmittelbar benachbart zur Scheibe angeordnet ist.

In einer vorteilhaften Ausgestaltung der Erfindung wird die Heizleistung der elektrisch beheizbaren Fläche so gewählt, dass sie eine Temperatur von 30° C bis 90°C, bevorzugt 50°C bis 70°C aufweist. Dafür wird erfindungsgemäß eine Heizleistung von 0,5 W/dm² bis 10 W/dm² benötigt. Eine derartige Heizleistung ist ausreichend um die Innenseite der Scheibe im vorgegebenen Bereich unter den Standardbedingungen der Kraftfahrzeugtechnik mittels Strahlungswärme von Beschlag zu befreien.

In einer weiteren vorteilhaften Ausgestaltung der Erfindung weist die elektrisch beheizbare Fläche eine Strahlungsleistung von 0,5 W/dm² bis 5 W/dm² auf. Eine derartige Strahlungsleistung ist ausreichend um die Innenseite der Scheibe im vorgegebenen Bereich unter den Standardbedingungen der Kraftfahrzeugtechnik mittels Strahlungswärme von Beschlag zu befreien.

Eine erfindungsgemäße Streulichtblende weist vorteilhafterweise eine Wärmeleitfähigkeit von mehr als 80 W/(m K), bevorzugt mehr als 190 W/(m K), besonders bevorzugt mehr als 300 W/(m K) auf. Die Oberfläche der Streulichtblende hat vorteilhafterweise eine Emissivität von 0,7 bis 0,97. Dazu enthält die erfindungsgemäße Streulichtblende ein Metall, bevorzugt Aluminium, Kupfer, Federbronze und/oder Stahl oder besteht daraus. Streulichtblenden aus Aluminium können beispielsweise als Meterware als Strangguss gefertigt werden. Streulichtblenden aus Kupfer werden vorzugsweise aus massiven Kupferplatten gepresst oder gestanzt.

Insbesondere besteht die Streulichtblende aus Aluminium, dessen zur Scheibe weisende Oberfläche schwarz eloxiert wurde. Dies hat den besonderen Vorteil, dass Streulicht, welches von außen durch die Scheibe in die Einhausung eintritt, nicht in den Strahlungsempfänger reflektiert wird und deshalb keine Störsignale hervorruft.
In einer vorteilhaften Ausgestaltung ist die Streulichtblende auf der zur Scheibe weisenden Oberfläche und insbesondere auf der zum Strahlengang zugewandten Seite strukturiert. Die Strukturierung ist beispielsweise eine Riffelung oder eine zickzackförmige oder wellenförmige Ausprägung. Dies hat den besonderen Vorteil, dass Streulicht möglichst nicht in den Strahlungsempfänger reflektiert wird.

Die erfindungsgemäße Streulichtblende kann vorteilhafterweise eine beheizbare Beschichtung und/oder Heizdrähte enthalten. Die Beschichtung oder die Heizdrähte enthalten bevorzugt Fluor-dotiertes Zinndioxid (F:SnO₂), Zinn dotiertes Indiumoxid (ITO), Silber, Kupfer, Zinn, Gold, Aluminium, Eisen, Wolfram, Chrom oder Legierungen davon und/oder mindestens ein elektrisch leitfähiges organisches Polymer. Die beheizbare Beschichtung weist bevorzugt eine Schichtdicke von 0,1 µm bis 50 µm, besonders bevorzugt 1 µm bis 10 µm auf.

Die erfindungsgemäße Streulichtblende enthält in einem ersten Bereich, außerhalb der elektrisch beheizbaren Fläche, ein Heizelement, bevorzugt eine Heizpatrone. Derartige Heizpatronen sind besonders kostengünstig und einfach zu verarbeiten. Aufgrund der hohen Wärmeleitfähigkeit des Materials der Streulichtblende wird die gesamte Streulichtblende erwärmt. Dies führt zu einer indirekten Erwärmung der beheizbaren Fläche und wiederum zu einer Strahlungsheizung des Bereichs.

Die Einhausung ist vorteilhafterweise mit der Scheibe durch einen Klebstoff verbunden. Der Klebstoff enthält bevorzugt Acrylatklebstoffe, Methylmethacrylatklebstoffe, Cyanacrylatklebstoffe, Polyepoxide, Silikonklebstoffe und/oder silanvernetzende Polymerklebstoffe sowie Gemische und/oder Copolymere davon.

Die Einhausung ist vorteilhafterweise mehrteilig ausgestaltet, wobei ein Halteteil mit der Scheibe durch einen Klebstoff verbunden und eine Abdeckung für Service-Zwecke lösbar mit dem Halteteil verbunden ist.

Die Einhausung ist bevorzugt im oberen Bereich der Windschutzscheibe und/oder Heckscheibe, besonders bevorzugt hinter einem Abdeckstreifen, einer Sonnenblende und/oder einem Bandfilter angeordnet.

Die Einhausung enthält bevorzugt wasserabsorbierende Materialien oder Trockenmittel, besonders bevorzugt Kieselgel, CaCl₂, Na₂SO₄, Aktivkohle, Silikate, Bentonite, Zeolithe und/oder Gemische davon. Die Trockenmittel können in die Oberfläche der Einhausung eingearbeitet sein und/oder in offenen Behältnissen in der Einhausung angeordnet sein. Die Trockenmittel sind bevorzugt so angeordnet, dass ein Luft- und Feuchtigkeitsaustausch mit der Luft im Inneren der Einhausung möglich ist, die Materialien aber nicht umherfliegen können und fixiert sind. Dies kann bevorzugt durch Einschließen der Trockenmittel in einen luft- und feuchtigkeitsdurchlässigen Polymerfilm oder in einem feinmaschigen Netz erfolgen.

Die Erfindung umfasst des Weiteren ein Verfahren zur Herstellung einer Scheibenanordnung mit elektrisch beheizbarer Streulichtblende, wobei
a. die Einhausung an dem vorgegebenen Bereich der Scheibe befestigt wird,
b. der Strahlungsempfänger und/oder die Strahlungsquelle in der Einhausung angeordnet wird und
c. die Streulichtblende in der Einhausung angeordnet wird, wobei der Strahlengang des Strahlungsempfängers und/oder der Strahlungsquelle zwischen Scheibe und Streulichtblende verläuft.

Die Erfindung umfasst des Weiteren die Verwendung der erfindungsgemäßen Scheibenanordnung in Fahrzeugen, Schiffen, Flugzeugen und Hubschraubern und bevorzugt als Windschutzscheibe und/oder Heckscheibe eines Fahrzeuges.

Im Folgenden wird die Erfindung anhand einer Zeichnung näher erläutert. Die Zeichnung ist eine schematische Darstellung und nicht maßstabsgetreu. Die Zeichnung schränkt die Erfindung in keiner Weise ein.

Es zeigen:
Figur 1 eine Draufsicht auf ein Ausgestaltungsbeispiel einer erfindungsgemäßen Scheibenanordnung,
Figur 2 eine vereinfachte, schematische Darstellung eines Querschnitts einer erfindungsgemäßen Scheibenanordnung,
Figur 3 einen Querschnitt eines Ausschnitts einer erfindungsgemäßen Scheibenanordnung,
Figur 4 einen Querschnitt eines Ausschnitts einer alternativen Ausgestaltung einer erfindungsgemäßen Scheibenanordnung,
Figur 5 einen Querschnitt einer erfindungsgemäßen Scheibenanordnung,
Figur 6a ein Flussdiagramm einer bevorzugten Ausführungsform des erfindungsgemäßen Verfahrens und
Figur 6b ein Flussdiagramm einer alternativen Ausführungsform des erfindungsgemäßen Verfahrens.

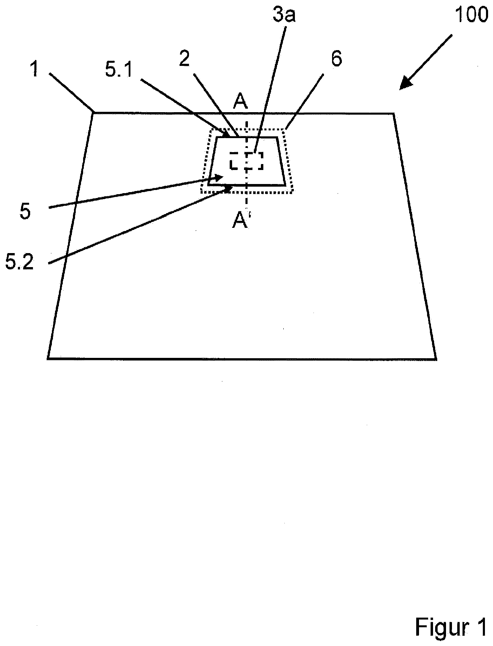

Figur 1 zeigt eine Draufsicht auf eine erfindungsgemäße Scheibenanordnung 100. Eine Einhausung 6, ein Strahlungsempfänger 3a und einen Bereich 2, der durch den Strahlengang 5 durch die Scheibe 1 vorgegeben wird, sind im oberen Bereich der Scheibe 1 angeordnet. Der Strahlengang 5 hat einen oberen Rand 5.1 und einen unteren Rand 5.2.

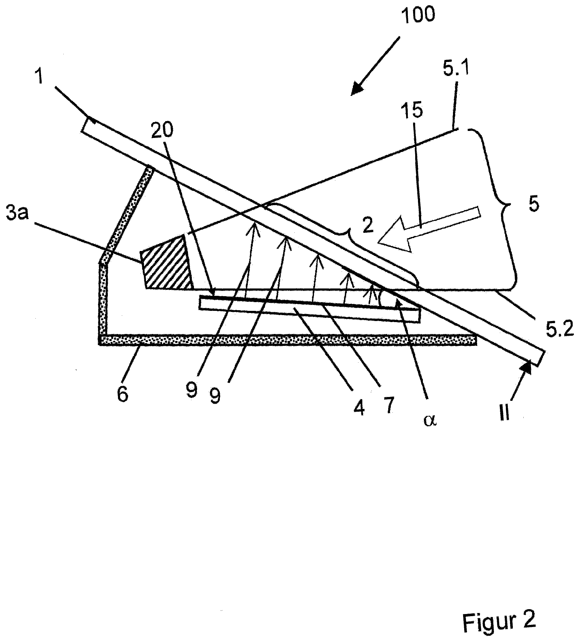

Figur 2 zeigt eine vereinfachte, schematische Darstellung eines Querschnitts entlang der Schnittlinie A-A' aus Figur 1. Die Einhausung 6 ist an der Innenseite II der Scheibe 1 angeordnet. Im Falle einer Fahrzeugscheibe ist die Innenseite II die dem Fahrzeuginnenraum zugewandte Seite der Scheibe 1.
Innerhalb der Einhausung 6 und unterhalb der Scheibe 1 ist ein Strahlungsempfänger 3a angeordnet. Der Strahlengang 5 des Strahlungsempfängers 3a verläuft trichterförmig von der Austrittslinse des Strahlungsempfängers 3a durch die Scheibe 1. Der Strahlengang 5 des Sichtfelds durchdringt die Scheibe 1 in einem Bereich 2, der zwischen dem oberen Rand 5.1 des Strahlengangs 5 und dem unteren Rand 5.2 des Strahlengangs 5 liegt. Der Bereich 2 muss ausreichend transparent für die elektromagnetische Strahlung 15 des Strahlungsempfängers 3a sein.

Unterhalb des Strahlungsempfängers 3a ist eine Streulichtblende 4 angeordnet. Die Streulichtblende 4 reicht vom Strahlungsempfänger 3a bis zur Scheibe 1. Die Streulichtblende 4 ist außerhalb und insbesondere unterhalb des Strahlengangs 5 des Strahlungsempfängers 3a angeordnet, um nicht den Strahlengang 5 einzuschränken. Die Streulichtblende 4 grenzt an den Bereich 2 der Scheibe 1 unter einem Winkel α von beispielsweise 30°.

Die Streulichtblende 4 weist an der Oberfläche 20 eine elektrisch beheizbare Fläche 7 auf. Die elektrisch beheizbare Fläche 7 kann unmittelbar beheizt werden, beispielsweise durch einen Heizleiter an der Oberfläche 20. Die elektrisch beheizbare Fläche 7 kann auch indirekt beheizt werden, beispielsweise durch ein elektrisches Heizelement in einem anderen Bereich der Streulichtblende 4, wobei die elektrisch beheizbare Fläche 7 durch die Wärmeleitung des Materials der Streulichtblende 4 erwärmt wird.

Die elektrisch beheizbare Fläche 7 ist gegenüberliegend zum Bereich 2 der Scheibe 1 angeordnet. Ist die elektrisch beheizbare Fläche 7 beheizt, so heizt sie den Bereich 2 der Scheibe 1 durch Wärmestrahlung 9 auf und befreit ihn dadurch von Beschlag. Dazu ist es besonders vorteilhaft, wenn der Bereich 2 und die elektrisch beheizbare Fläche 7 möglichst parallel verlaufen, so dass die Wärmestrahlung 9, die von der elektrisch beheizbaren Fläche 7 ausgeht, möglichst senkrecht auf den Bereich 2 der Scheibe 1 auftrifft. Gleichzeitig würde dadurch ein sehr großer Bauraum benötigt werden, der im Falle einer Anordnung an einer Fahrzeugscheibe unerwünscht weit in den Innenraum ragen würde. Deshalb ist ein gewisser Winkel α von 5° bis 45° und beispielsweise 30° bevorzugt.

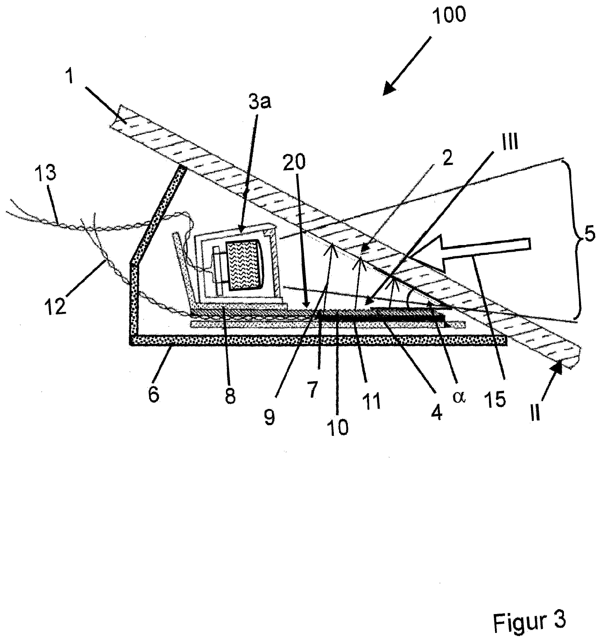

Figur 3 zeigt einen Querschnitt durch eine erfindungsgemäße Scheibenanordnung 100 im Bereich einer Einhausung 6. Der Querschnitt verläuft entlang der Schnittlinie A-A' aus Figur 1. Die Einhausung 6 ist an der Innenseite II einer Scheibe 1 angeordnet und durch Verkleben mit einem Acrylatklebstoff an der Scheibe 1 befestigt. Die Scheibe 1 ist beispielsweise eine Windschutzscheibe eines Kraftfahrzeugs und beispielsweise ein Verbundsicherheitsglas. Die Innenseite II ist die dem Fahrzeuginnenraum zugewandte Seite der Scheibe 1. Die Einhausung enthält beispielsweise Polybutylenterephthalat mit einem 10%-igen Anteil an Glasfasern (PBT-GF10) und wurde durch ein Spritzgußverfahren hergestellt.

Innerhalb der Einhausung 6 und unterhalb der Scheibe 1 ist ein Strahlungsempfänger 3a angeordnet. Der Strahlungsempfänger 3a ist beispielsweise eine Infrarotkamera für ein Nachtfahrassistenzsystem. Der Strahlungsempfänger 3a detektiert insbesondere infrarote elektromagnetische Strahlung 15 im Wellenlängenbereich von 800 bis 1100 nm. Das Sichtfeld des Strahlungsempfängers 3a ist zur Bilderfassung des vor dem Fahrzeug befindlichen Verkehrsraumes ausgerichtet. Der Strahlengang 5 des Sichtfelds verläuft trichterförmig von der Austrittslinse des Strahlungsempfängers 3a durch die Scheibe 1. Der Strahlengang 5 des Sichtfelds durchdringt die Scheibe 1 in einem Bereich 2. Der Bereich 2 muss ausreichend transparent für die infrarote elektromagnetische Strahlung 15 des Strahlungsempfängers 3a sein. Die Scheibe 1 hat im Bereich 2 beispielsweise eine Transparenz für Infrarotstrahlung im Wellenlängenbereich von 800 nm bis 1100 nm von mehr als 70%. Der Strahlungsempfänger 3a ist über Zuleitungen 13 mit einer hier nicht dargestellten Auswerteelektronik verbunden.

Unterhalb des Strahlungsempfängers 3a ist eine Streulichtblende 4 angeordnet. Unterhalb bedeutet hier im Falle einer Fahrzeugscheibe in eingebautem Zustand, lotrecht und näher zur Unterseite des Fahrzeugs. Die Streulichtblende 4 reicht vom Strahlungsempfänger 3a bis zur Scheibe 1. Die Streulichtblende 4 ist unterhalb des Strahlengangs 5 des Strahlungsempfängers 3a angeordnet, um nicht das Sichtfeld auf den Verkehrsraum einzuschränken. Die Streulichtblende 4 grenzt an den Bereich 2 der Scheibe 1 unter einem Winkel α von beispielsweise 30°.

Die Streulichtblende 4 besteht beispielsweise aus Aluminium mit einer Wärmeleitfähigkeit von 200 W/(m K). Die Streulichtblende 4 ist auf der von außen, durch die Scheibe 1 sichtbaren Oberfläche 20 schwarz eloxiert. Des Weiteren weist die Oberfläche 20 eine zickzackförmige oder wellenförmige Strukturierung 10 auf. Dadurch werden unerwünschte Reflexionen von seitlich eintreffendem Streulicht in den Strahlungsempfänger 3a reduziert oder verhindert.

Die Streulichtblende 4 weist an der Oberfläche 20 eine elektrisch beheizbare Fläche 7 auf. Im dargestellten Beispiel erfolgt die Beheizung der Fläche 7 durch ein elektrisches Heizelement 11 an der Unterseite der Streulichtblende 4. Die Grundfläche der elektrisch beheizbaren Fläche 7 der Streulichtblende 4 beträgt beispielsweise 35 cm². Das elektrische Heizelement 11 ist beispielsweise ein Heizdraht oder eine elektrisch leitfähige Beschichtung und kann durch einen elektrischen Strom geheizt werden. Das Heizelement 11 ist über Zuleitungen 12 mit einer Spannungsquelle verbunden, beispielsweise mit dem Bordnetz eines Kraftfahrzeugs.

Wird das elektrische Heizelement 11 durch einen elektrischen Strom geheizt, erwärmt sich die elektrisch beheizbare Fläche 7 der Oberfläche 20 der Streulichtblende 4 aufgrund der hohen Wärmeleitfähigkeit des Materials der Streulichtblende 4. Die erwärmte Fläche 7 ist insbesondere dazu geeignet, den Bereich 2 der Scheibe 1 durch Wärmestrahlung 9 zu heizen und dadurch von Beschlag zu befreien. Wie Untersuchungen der Erfinder ergaben, genügt eine Heizleistung von 6 W/dm² um die Innenseite II der Scheibe 1 eines Kraftfahrzeugs im Bereich 2 bei 0°C Außentemperatur beschlagsfrei zu halten.

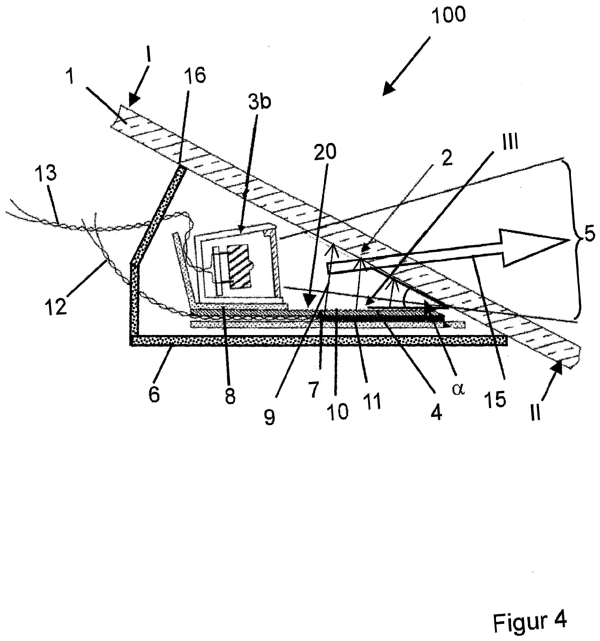

Figur 4 zeigt einen Querschnitt einer alternativen Ausgestaltung einer erfindungsgemäßen Scheibenanordnung 100. Die Scheibenanordnung 100 entspricht der Scheibenanordnung 100 aus Figur 1. Anstelle des Strahlungsempfängers 3a ist eine Strahlungsquelle 3b innerhalb der Einhausung 6 angeordnet. Die Strahlungsquelle 3b enthält beispielsweise zehn rote Leuchtdioden und dient als sogenannte dritte Bremsleuchte an der Heckscheibe eines Kraftfahrzeugs. Die Einhausung 6 ist beispielsweise in einem oberen Bereich der Scheibe 1 angeordnet, der keine aufgedruckten oder anderweitigen Heizstrukturen aufweist. Die elektromagnetische Strahlung 15 der Strahlungsquelle 3b durchdringt die Scheibe 1 in einem Bereich 2. Durch die Wärmestrahlung 9, die von der elektrisch beheizbaren Fläche 7 der Streulichtblende 4 ausgeht, kann der Bereich 2 beschlagsfrei gehalten werden. Des Weiteren beschleunigt die Wärmestrahlung eine Enteisung der Außenseite I der Scheibe 1 über dem Bereich 2.

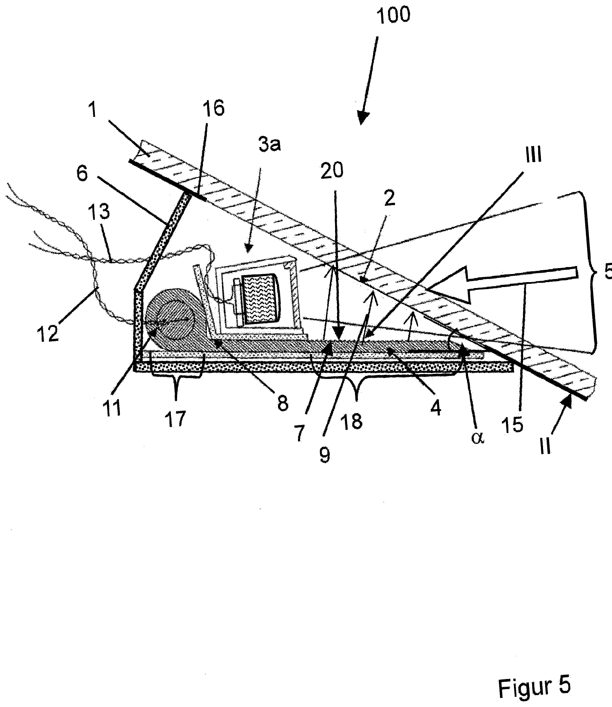

Figur 5 zeigt eine Draufsicht auf ein weiteres Ausgestaltungsbeispiel einer erfindungsgemäßen Scheibenanordnung 100. Auf der Innenseite II der Scheibe 1 ist eine infrarotreflektierende, niedrig emissive Beschichtung 16 auf der Basis von Indiumzinnoxid angeordnet. Derartige infrarotreflektierende Beschichtungen 16 sind beispielsweise aus WO 2011/088330 A2 bekannt. Die Beschichtung 16 hat eine Transparenz für elektromagnetische Strahlung im sichtbaren Bereich von etwa 80 %, absorbiert aber einen großen Anteil von infraroter elektromagnetischer Strahlung. Die Beschichtung 16 ist innerhalb der Einhausung 6 und insbesondere im Bereich 2 des Strahlengangs 5 des Strahlungsempfängers 3a entschichtet. Durch die Entschichtung kann ein Großteil der infraroten Strahlung 15 zum Strahlungsempfänger 3a gelangen. Durch die Einhausung 6 auf der Innenseite II der Scheibe 1 ist der entschichtete Bereich von außen kaum mehr zu erkennen und der ästhetische Aspekt der Scheibe 1 bleibt erhalten.

Im dargestellten Beispiel ist das Heizelement 11 in einem von der Scheibe 1 entfernten Bereich 17 der Streulichtscheibe 4 angeordnet. Das Heizelement 11 ist beispielsweise eine kostengünstige und einfach zu verarbeitende Heizpatrone, die in eine Öffnung des Aluminiumkörpers der Streulichtblende 4 eingepresst wurde. Die im Heizelement 11 erzeugte Wärme wird aufgrund der guten Wärmeleitfähigkeit des Aluminiums an den Bereich 18 und die Fläche 7 weitergeleitet. Die somit indirekt elektrisch beheizte Fläche 7 beheizt über Wärmestrahlung 9 den Bereich 2 der Scheibe 1. Um den Strahlungsempfänger 3a vor zu hohen Temperaturen zu schützen ist zwischen Strahlungsempfänger 3a und Streulichtblende 4 eine thermische Isolierung 8 angeordnet. Die thermische Isolierung 8 enthält beispielsweise ein Polymer und insbesondere das Material der Einhausung 6.

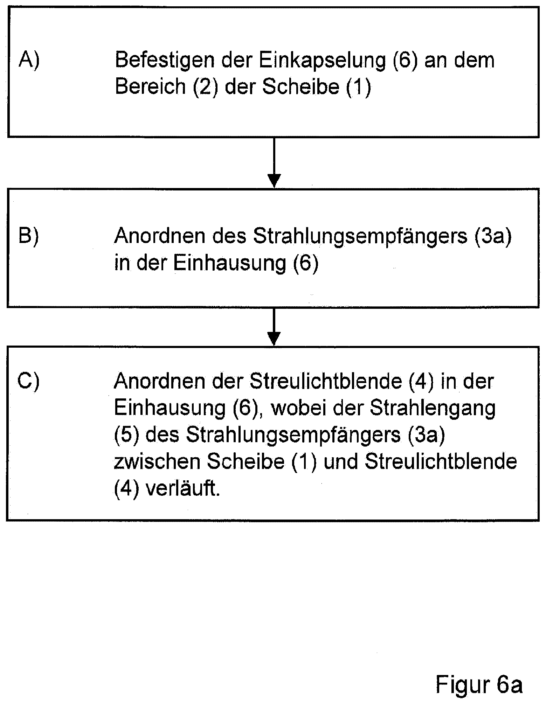

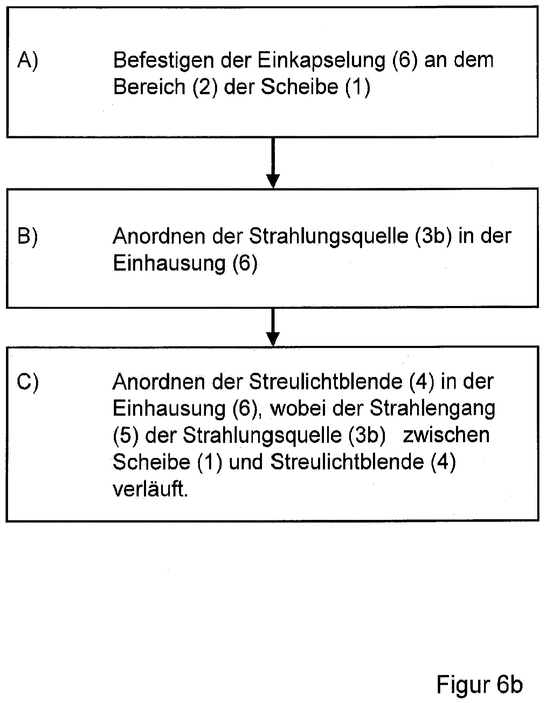

Figur 6a und 6b zeigen jeweils ein Flussdiagramm eines erfindungsgemäßen Verfahrens zur Herstellung einer erfindungsgemäßen Scheibenanordnung 100.

Die vorliegende Erfindung zeigt eine Reihe von Vorteilen gegenüber Scheibenanordnungen nach dem Stand der Technik. Bei Scheibenanordnungen mit Strahlungsempfängern oder Strahlungsquellen nach dem Stand der Technik wird üblicherweise die Scheibe in der Umgebung des Bereichs, durch den die elektromagnetische Scheibe transmittiert wird, geheizt. Da möglichst keine Heizleiter diesen Bereich durchkreuzen sollen, sind die Heizleiter am äußeren Rande des Bereichs angeordnet. Die Erwärmung des Inneren des Bereichs erfolgt lediglich über Wärmeleitung. Da Glas ein schlechter Wärmeleiter ist, wird der Bereich sehr inhomogen und unzureichend erwärmt. Durch diese Art der Beheizung des Bereichs ist kein befriedigendes Ergebnis zu erzielen.

Bei der vorliegenden Erfindung wird der Bereich 2 durch Wärmestrahlung 9 direkt geheizt. Die Übertragung einer ausreichenden Heizleistung erfolgt allein aufgrund von Wärmestrahlung. Dies erlaubt einen gleichmäßigen Energieeintrag auf den zu beheizenden Bereich. Gleichzeitig ist es möglich den nötigen Energieverbrauch gering zu halten.

Die erfindungsgemäße elektrisch beheizbare Streulichtblende 4 ist einfach in eine bereits vorhandene Einhausung 6 einer Kamera oder einer dritten Bremsleuchte zu integrieren und ersetzt dort beispielsweise eine bereits vorhandene, nicht beheizbare Streulichtblende. Die Spannungsversorgung der erfindungsgemäßen Streulichtblende 4 kann einfach über die Spannungsversorgung der Kamera oder der Bremsleuchte erfolgen.

Es war für den Fachmann unerwartet und überraschend, dass die Übertragung von Wärmestrahlung bei der erfindungsgemäßen Scheibenanordnung ausreichend ist, um den zu beheizenden Bereich beschlagsfrei zu halten.

### Bezugszeichenliste

- 1: Scheibe
- 2: Bereich
- 3a: Strahlungsempfänger
- 3b: Strahlungsquelle

- 4: Streulichtblende
- 5: Strahlengang
- 5.1: oberer Rand des Strahlengangs 5
- 5.2: unterer Rand des Strahlengangs 5
- 6: Einhausung
- 7: beheizbare Fläche
- 8: thermische Isolierung
- 9: Wärmestrahlung
- 10: Strukturierung, Riffelung
- 11: Heizelement
- 12: Zuleitung zum Heizelement 7 oder zur Heizfläche 11
- 13: Zuleitung zum Strahlungsempfänger 3a oder zur Strahlungsquelle 3b
- 15: elektromagnetische Strahlung
- 16: Beschichtung
- 17: erster Bereich der Streulichtblende 4
- 18: zweiter Bereich der Streulichtblende 4
- 20: Oberfläche der Streulichtblende 4
- 100: Scheibenanordnung

- α: Winkel zwischen Scheibe 1 und Streulichtblende 4
- I: Außenseite der Scheibe 1
- II: Innenseite der Scheibe 1
- III: Seite der Streulichtblende 4
- A-A': Schnittlinie

## Patentansprüche

1. Scheibenanordnung (100) mit elektrisch beheizbarer Streulichtblende (4), mindestens umfassend:
- eine Scheibe (1) mit einer Einhausung (6) auf der Innenseite (II) der Scheibe (1),
- einen Strahlungsempfänger (3a) und/oder eine Strahlungsquelle (3b), der/die innerhalb der Einhausung (6) so der Scheibe (1) zugewandt ist, dass ein Strahlengang (5) einer elektromagnetischen Strahlung (15) durch einen vorgegebenen Bereich (2) der Scheibe (1) führt,
**gekennzeichnet durch**
- eine Streulichtblende (4), die innerhalb der Einhausung (6) und unterhalb des Strahlengangs (5) angeordnet ist und
- eine elektrisch beheizbare Fläche (7) in der Streulichtblende (4), die Wärmestrahlung abstrahlt und den Bereich (2) allein durch die Wärmestrahlung beheizt,
wobei die Streulichtblende (4) außerhalb der elektrisch beheizbaren Fläche (7) ein elektrisches Heizelement (7) aufweist und die elektrisch beheizbare Fläche (7) durch Wärmeleitung beheizbar ist, und wobei die Streulichtblende (4) ein Metall enthält oder daraus besteht,
wobei die elektrisch beheizbare Fläche (7) eine Heizleistung von 0,5 W/dm² bis 10 W/dm² aufweist.

2. Scheibenanordnung (100) nach Anspruch 1, wobei der Strahlungsempfänger (3a) eine Kamera oder einen Photosensor für infrarote, sichtbare und/oder ultraviolette elektromagnetische Strahlung enthält.

3. Scheibenanordnung (100) nach Anspruch 1, wobei die Strahlungsquelle (3b) eine Glühbirne oder eine Leuchtdiode für infrarote, sichtbare und/oder ultraviolette elektromagnetische Strahlung enthält.

4. Scheibenanordnung (100) nach einem der Ansprüche 1 bis 3, wobei die Streulichtblende (4) Aluminium, Kupfer, Federbronze und/oder Stahl und bevorzugt schwarz eloxiertes Aluminium enthält oder daraus besteht.

5. Scheibenanordnung (100) nach einem der Ansprüche 1 bis 4, wobei die Streulichtblende (4) eine Wärmeleitfähigkeit von mehr als 80W/(m K), bevorzugt mehr als 190W/(m K) und besonders bevorzugt mehr als 300 W/(m K) aufweist.

6. Scheibenanordnung (100) nach einem der Ansprüche 1 bis 5, wobei das elektrische Heizelement (7) eine Heizpatrone (11) ist.

7. Scheibenanordnung (100) nach einem der Ansprüche 1 bis 6, wobei der Winkel (α) zwischen Bereich (2) und elektrisch beheizbarer Fläche (7) von 5° bis 65° und bevorzugt von 10° bis 45° beträgt.

8. Scheibenanordnung (100) nach einem der Ansprüche 1 bis 7, wobei der Bereich (2) eine Transparenz für die elektromagnetische Strahlung (15) von > 60 %, bevorzugt > 70 %, besonders bevorzugt > 90 % aufweist.

9. Scheibenanordnung (100) nach einem der Ansprüche 1 bis 8, wobei die Streulichtblende (4) auf der dem Strahlengang (5) zugewandten Seite (III) eine Riffelung (10) aufweist.

10. Scheibenanordnung (100) nach einem der Ansprüche 1 bis 9, wobei die Scheibe (1) Glas und/oder Polymere, bevorzugt Flachglas, Floatglas, Quarzglas, Borosilikatglas, Kalk-Natron-Glas, Polymethylmethacrylat und/oder Gemische davon enthält.

11. Scheibenanordnung (100) nach einem der Ansprüche 1 bis 10, wobei die Einhausung (6) im oberen Bereich der Scheibe (1) angeordnet ist.

12. Verfahren zur Herstellung einer Scheibenanordnung (100) mit elektrisch beheizbarer Streulichtblende (4) nach einem der Ansprüche 1 bis 11, wobei
a) die Einhausung (6) an dem Bereich (2) der Scheibe (1) befestigt wird,
b) der Strahlungsempfänger (3a) und/oder die Strahlungsquelle (3b) in der Einhausung (6) angeordnet wird und
c) die Streulichtblende (4) in der Einhausung (6) angeordnet wird, wobei der Strahlengang (5) des Strahlungsempfängers (3a) und/oder der Strahlungsquelle (3b) zwischen Scheibe (1) und Streulichtblende (4) verläuft.

13. Verwendung einer Scheibenanordnung (100) mit elektrisch beheizbarer Streulichtblende (4) nach einem der Ansprüche 1 bis 11 in Fahrzeugen, Schiffen, Flugzeugen und Hubschraubern, bevorzugt als Windschutzscheibe und/oder Heckscheibe eines Fahrzeuges.

## Claims

1. Pane arrangement (100) having an electrically heatable baffle plate (4), comprising at least:
- a pane (1) with an enclosure (6) on the inner side (II) of the pane (1),
- a radiation receiver (3a) and/or a radiation source (3b), which is/are turned toward the pane (1) within the enclosure (6) such that a beam path (5) of electromagnetic radiation (15) passes through a predefined region (2) of the pane (1), **characterized by**
- a baffle plate (4), which is arranged within the enclosure (6) and below the beam path (5), and
- an electrically heatable area (7) in the baffle plate (4), which radiates heat radiation and heats the region (2) solely by the heat radiation,
wherein the baffle plate (4) has an electrical heating element (7) outside the electrically heatable area (7) and the electrically heatable area (7) can be heated by thermal conduction, and wherein the baffle plate (4) contains or consists of a metal,
wherein the electrically heatable area (7) has a heating power of 0.5 W/dm² to 10 W/dm².

2. Pane arrangement (100) according to claim 1, wherein the radiation receiver (3a) contains a camera or a photosensor for infrared, visible, and/or ultraviolet electromagnetic radiation.

3. Pane arrangement (100) according to claim 1, wherein the radiation source (3b) contains an incandescent bulb or a light-emitting diode for infrared, visible, and/or ultraviolet electromagnetic radiation.

4. Pane arrangement (100) according to one of claims 1 through 3, wherein the baffle plate (4) contains, or is made of aluminum, copper, spring bronze, and/or steel and preferably black anodized aluminum.

5. Pane arrangement (100) according to one of claims 1 through 4, wherein the baffle plate (4) has thermal conductivity of more than 80W/(m K), preferably more than 190W/(m K), and particularly preferably more than 300 W/(m K).

6. Pane arrangement (100) according to one of claims 1 through 5, wherein the electrical heating element (7) is a heating cartridge (11).

7. Pane arrangement (100) according to one of claims 1 through 6, wherein the angle (α) between the region (2) and the electrically heatable area (7) is from 5° to 65° and preferably from 10° to 45°.

8. Pane arrangement (100) according to one of claims 1 through 7, wherein the region (2) has transparency for electromagnetic radiation (15) of > 60%, preferably > 70%, particularly preferably > 90%.

9. Pane arrangement (100) according to one of claims 1 through 8, wherein the baffle plate (4) has fluting (10) on the side (III) turned toward the beam path (5).

10. Pane arrangement (100) according to one of claims 1 through 9, wherein the pane (1) contains glass and/or polymers, preferably flat glass, float glass, quartz glass, borosilicate glass, soda lime glass, polymethyl methacrylate, and/or mixtures thereof.

11. Pane arrangement (100) according to one of claims 1 through 10, wherein the enclosure (6) is arranged in the upper region of the pane (1).

12. Method for producing a pane arrangement (100) having an electrically heatable baffle plate (4) according to one of claims 1 through 11, wherein
a) the enclosure (6) is fastened on the region (2) of the pane (1),
b) the radiation receiver (3a) and/or the radiation source (3b) is arranged in the enclosure (6), and
c) baffle plate (4) is arranged in the enclosure (6), wherein the beam path (5) of the radiation receiver (3a) and/or the radiation source (3b) runs between the pane (1) and the baffle plate (4).

13. Use of a pane arrangement (100) having an electrically heatable baffle plate (4) according to one of claims 1 through 11 in motor vehicles, ships, airplanes, and helicopters, preferably as a windshield and/or a rear window of a motor vehicle.

## Revendications

1. Arrangement de vitres (100) avec un pare-lumière (4) chauffé électriquement, comprenant au moins :
- une vitre (1) munie d'un logement (6) à la face intérieure (II) de la vitre (1),
- un récepteur de rayonnement (3a) et/ou une source de rayonnement (3b), qui au sein de le logement (6) est tourné vers la vitre (1) de telle manière qu'un trajet optique (5) d'un rayonnement électromagnétique (15) passe à travers une zone prédéfinie (2) de la vitre (1),
**caractérisé en ce que**
- un pare-lumière (4), qui est disposé dans le logement (6) et sous le trajet optique (5) et
- une surface chauffé électriquement (7) dans le pare-lumière (4), qui émet un rayonnement thermique et chauffe la zone (2) uniquement par le rayonnement thermique,
dans lequel le pare-lumière (4) comporte un élément chauffant électrique (7) à l'extérieur de la surface chauffé électriquement (7) et la surface chauffé électriquement (7) peut être chauffée par conduction thermique, et dans lequel le pare-lumière (4) contient un métal ou est constitué d'un métal,
la surface chauffé électriquement (7) a une puissance de chauffage comprise entre 0,5 W/dm² et 10 W/dm².

2. Arrangement de vitres (100) selon la revendication 1, où le récepteur de rayonnement (3a) contient une caméra ou un capteur photo pour les rayonnement électromagnétique infrarouge, visible et/ou ultraviolette.

3. Arrangement de vitres (100) selon la revendication 1, où la source de rayonnement (3b) contient une ampoule ou une diode électroluminescente pour le rayonnement électromagnétiques infrarouge, visible et/ou ultraviolette.

4. Arrangement de vitres (100) selon l'une des revendications 1 à 3, où le pare-lumière (4) contient ou est fabriqué de l'aluminium, du cuivre, du bronze à ressort et/ou de l'acier et, de préférence, de aluminium anodisé noir.

5. Arrangement de vitres (100) selon l'une des revendications 1 à 4, où le pare-lumière (4) possède une conductivité thermique supérieure à 80 W/(m K), de préférence supérieure à 190 W/(m K) et de manière particulièrement préférée supérieure à 300 W/(m K).

6. Arrangement de vitres (100) selon l'une des revendications 1 à 5, dans lequel l'élément chauffant électrique (7) est une cartouche chauffante (11).

7. Arrangement de vitres (100) selon l'une des revendications 1 à 6, où l'angle est (α) entre la zone (2) et la surface chauffée électriquement (7) est de 5° à 65° et de préférence de 10° à 45°.

8. Arrangement de vitres (100) selon l'une des revendications 1 à 7, où la zone (2) présente une transparence au rayonnement électromagnétique (15) de > 60 %, de préférence plus de 70 %, et de manière particulièrement préférée plus de 90 %.

9. Arrangement de vitres (100) selon l'une des revendications 1 à 8, où le pare-lumière (4) présente une nervure (10) sur la face (III) tourné vers le trajet optique (5).

10. Arrangement de vitres (100) selon l'une des revendications 1 à 9, où la vitre (1) contient du verre et/ou des polymères de préférence du verre plat, du verre flotté, du verre de quartz, du verre borosilicaté, du verre sodocalcique, du polyméthacrylate de méthyle et/ou des mélanges de ceux-ci.

11. Arrangement de vitres (100) selon l'une des revendications 1 à 10, où le logement (6) dans la partie supérieure de la vitre (1).

12. Procédé de fabrication d'un arrangement de vitres (100) avec pare-lumière chauffé électriquement (4) selon l'une des revendications 1 à 11, où
a) le logement (6) est attaché à la zone (2) de la vitre (1),
b) le récepteur de rayonnement (3 a) et/ou la source de rayonnement (3 b) est arrangé dans dans le logement (6) et
c) le pare-lumière (4) dans le logement (6), arrangé avec le faisceau (5) de l'autoradio de rayonnement (3 a) ou la source de rayonnement (3 b) entre la vitre (1) et (4) pare-soleil s'exécute.

13. Utilisation d'un arrangement de vitres (100) avec un pare-lumière chauffé électriquement (4) selon l'une des revendications 1 à 11 dans des véhicules, navires, avions et hélicoptères, de préférence comme fenêtre pare-brise ou fenêtre arrière d'un véhicule.
